Europäisches Patentamt

(19) European Patent Office

Office européen des brevets

(11) Numéro de publication: **0 177 394 B1**

(12) **FASCICULE DE BREVET EUROPEEN**

(45) Date de publication du fascicule du brevet: 12.07.89

(51) Int. Cl.⁴: **G09F 3/03**, G01S 15/04

(21) Numéro de dépôt: 85401786.0

(22) Date de dépôt: 16.09.85

(54) Système de surveillance de conteneurs à sceaux ultrasonores utilisant des terminaux autonomes.

(30) Priorité: 18.09.84 FR 8414278

(43) Date de publication de la demande: 09.04.86 Bulletin 86/15

(45) Mention de la délivrance du brevet: 12.07.89 Bulletin 89/28

(84) Etats contractants désignés: BE DE GB IT LU NL

(56) Documents cités:
EP-A- 0 018 198
EP-A- 0 082 763
CH-A- 537 065

LE NOUVEL AUTOMATISME, vol. 26, no. 19, janvier-février 1981, pages 61-66, Paris, FR; S. MONCHAUD et al.: "Détection d'obstacles par capteur simple de mesure de distance à ultrasons"

(73) Titulaire: COMMISSARIAT A L'ENERGIE ATOMIQUE, 31/33, rue de la Fédération, F-75015 Paris(FR)
Titulaire: COMMUNAUTE EUROPEENNE DE L'ENERGIE ATOMIQUE (EURATOM), Bâtiment Jean Monnet-DG XIII/A1 Plateau du Kirchberg, L-2920 Luxembourg(LU)

(72) Inventeur: Schaal, Alfred, 8, rue Ramolfo-Garnier, F-91300 Massy(FR)
Inventeur: Laharrague, Philippe, Avenue Joliot Curie Le Ripault, F-37260 Monts(FR)
Inventeur: Denis, René, Via G.Verdi 3, I-21014 Laveno-Mombello (VA)(IT)

(74) Mandataire: Mongrédien, André et al, c/o BREVATOME 25, rue de Ponthieu, F-75008 Paris(FR)

## Description

La présente invention a pour objet un système de surveillance de conteneurs à sceaux ultrasonores. Elle trouve une application dans la surveillance de récipients contenant des produits dangereux, des matériaux précieux, des documents, etc...

Le principe de la surveillance par sceaux ultrasonores est connu. Il consiste à fixer de manière définitive un sceau ultrasonore sur un récipient à surveiller, ce sceau étant pourvu d'un marquage unique et non reproductible disposé dans le voisinage de la zone préétablie de rupture du sceau. Ce marquage est obtenu par des irrégularités de structure de la matrice qui contient le sceau, par exemple par des inclusions de matière ou des cavités distribuées de manière aléatoire.

En général, un sceau ultrasonore comprend un transducteur apte à transformer une excitation électrique en une onde ultrasonore et réciproquement. Les irrégularités de structure présentes sur le trajet de l'onde ultrasonore émise, donnent naissance à des échos ultrasonores détectés par le transducteur, qui délivre en retour un signal électrique dont la forme complexe est spécifique du sceau. Des moyens électroniques sont prévus pour exciter le transducteur et pour recueillir le signal électrique qu'il délivre et analyser ce signal. Dans un tel dispositif, le transducteur ultrasonore travaille à la fois en émetteur et en récepteur, de sorte qu'un sceau ne comprend qu'un seul transducteur.

Dans un sceau ultrasonore de l'art antérieur, le transducteur reçoit à travers un câble d'alimentation une impulsion électrique de haute tension, par exemple de 100 à 200 volts, de largeur voisine de la dizaine de microseconde et de temps de montée de 50 à 100 ns. Le transducteur engendre une onde acoustique qui se propage à travers une ligne à retard et se trouve partiellement réfléchie par les défauts qu'elle rencontre. L'onde composée réfléchie par ces défauts atteint le transducteur récepteur qui délivre alors un signal basse tension. Sa fréquence est d'environ 5MHz et sa valeur crête 100 mV, avec un retard de 5 µs et une durée de 10 µs. Ce signal constitue l'identité du sceau. Il contient de plus l'information d'intégrité compte tenu de ce que toute altération notable du scéau et, notamment sa rupture, modifie nettement la forme du signal.

Le signal reçu fait l'objet d'un redressement puis d'un échantillonnage sur quelques valeurs (de l'ordre d'une dizaine). Les valeurs de ces quelques échantillons sont ensuite converties en numérique et transmises à un module de traitement. Celui-ci compare les valeurs reçues (après un éventuel traitement numérique) à des valeurs de référence contenues dans une mémoire. Il en déduit l'identité du sceau et vérifie son intégrité. Le module de traitement peut également déclencher des procédures particulières comme des alarmes, en fonction des résultats du contrôle.

Ces systèmes ne conviennent pas pour l'application envisagée par l'invention, qui est celle du contrôle d'un grand nombre de conteneurs à divers instants pouvant être très espacés (par exemple 1 année), le contrôle devant pouvoir se faire par des appareils distincts (cas des conteneurs transportés d'un site à un autre).

Le problème qui se pose avant tout, dans une telle application, est celui de la stabilité et de la reproductibilité des moyens mis en oeuvre pour relever la "signature", d'un sceau autrement dit pour faire l'acquisition des informations. En effet, si l'on veut pouvoir contrôler et identifier à un an d'intervalle un conteneur parmi plusieurs, il est nécessaire que les moyens d'acquisition utilisés soient exempts d'instabilités, de fluctuations, de dérives.

Inversement, si l'on veut pouvoir contrôler un même sceau avec différents appareils, il faut que la structure de cet appareil soit reproductible et que la signature d'un sceau relevé avec un appareil soit la même si l'on change d'appareil.

Les systèmes de l'art antérieur ne conviennent pas à cette application pour les raisons suivantes. Tout d'abord l'impulsion d'excitation, qui est très étroite, peut être soumise, dans le temps, à de légères variations de durée, lesquelles ont une importance considérable sur la forme du signal délivré par le sceau. Cette sensibilité à la largeur du signal d'excitation se comprend si l'on considère que chaque front de l'impulsion d'excitation (front avant puis front arrière) ébranle le milieu acoustique disposé dans le sceau ultrasonore, le signal global reçu résultant de l'interférence entre les deux composantes acoustiques ainsi créées.

Par ailleurs, et comme indiqué plus haut, il existe une grande disparité entre l'amplitude du signal d'excitation (une centaine de volts) et celle du signal reçu (une centaine de millivolts) de sorte que des moyens électroniques efficaces doivent être disposés entre le récepteur et le sceau pour éviter que le premier ne soit aveuglé au moment de l'émission. Or, de tels moyens sont fatalement affectés de dérive au cours du temps.

Enfin, l'émetteur est relié au transducteur émetteur par un câble, et là encore des variations peuvent apparaître (désadaptation, parasites) qui nuisent à la reproductibilité de la mesure.

L'invention a justement pour but de remédier à ces inconvénients. A cette fin, elle préconise une organisation particulière du sceau et de ses moyens d'excitation, qui confère à l'ensemble une grande stabilité et une excellente reproductibilité. Ces buts sont atteints essentiellement grâce à trois caractéristiques :
- le sceau ultrasonore est double, en ce sens qu'il comprend un transducteur émetteur et un transducteur récepteur,
- le signal d'excitation du transducteur émetteur est un échelon de tension etnon plus une impulsion brève,
- le circuit capable d'engendrer ce signal d'excitation est situé à proximité immédiate du transducteur.

Ces moyens sont bien de nature à éliminer les défauts énumérés plus haut. En effet :
a) La séparation entre transducteur émetteur et transducteur récepteur évite que le récepteur ne soit aveuglé par l'émetteur. En quelque sorte, c'est le sceau lui même qui joue le rôle de filtre (en l'occurrence de filtre mécanique).

b) Le fait que le signal d'excitation soit un échelon de tension réduit les risques d'instabilité : un tel signal n'est plus caractérisé que par deux paramètres, à savoir l'amplitude et le temps de montée. Or, le premier est très facile à stabiliser puisqu'une tension continue peut être obtenue sans grand problème à l'aide d'une alimentation stabilisée. Le second n'est pas critique si on lui donne une valeur située en-dessous d'un seuil ; toute fluctuation du temps de montée se traduira par un changement du spectre du signal, ce qui n'a pas une importance critique. Par exemple le raidissement du front de montée pourra se traduire par un élargissement du spectre de 30 à 40 MHz, ce qui n'a pas d'incidence sur une installation fonctionnant à 5 MHz.

c) Enfin, la disposition du circuit d'excitation à proximité du transducteur émetteur évite tout risque lié au câble de liaison. On observera d'ailleurs que cette troisième disposition est liée à la seconde dans la mesure où, si l'on devait émettre un plateau de tension de 100 V sur une ligne adaptée, par exemple de 50 ohms, cela nécessiterait une puissance de 200 W, ce qui serait prohibitif. L'utilisation d'une marche de tension implique donc que le circuit générateur de cette tension soit disposé à proximité immédiate du transducteur émetteur.

Un sceau ultrasonore à double transducteur n'est pas une nouveauté en soi. Un tel dispositif est décrit dans le document de brevet FR-A-2518751. Mais un tel sceau n'est pas excité par un échelon de tension et n'est pas équipé d'un émetteur accolé au transducteur émetteur.

Les inventeurs ont montré que si le système possédait les trois caractéristiques énumérées plus haut, il présentait la stabilité et la reproductibilité requises pour l'application envisagée. Dès lors, il suffit de compléter l'installation par des moyens d'échantillonnage, de numérisation et de traitement de type classique. En d'autres termes, les inventeurs ont réussi à déterminer les importances relatives des différents moyens de mesure dans le problème de la stabilité et la reproductibilité de la mesure et ont trouvé que la part essentielle des risques revenait à la partie sceau et électronique d'acquisition, ce qui n'était pas évident a priori.

Dans l'application envisagée par l'invention, du contrôle de conteneurs à des instants différents, en particulier après transport d'un site à un autre, il est particulièrement avantageux de rassembler une partie des moyens de réception dans une "valise" électronique qu'un contrôleur peut emporter avec lui et de rejeter les moyens de traitement destinés à contrôler la signature du sceau examiné dans un poste central de traitement auquel les différentes valises peuvent être reliées par ligne téléphonique ordinaire, comme des terminaux informatiques. Dans cette variante, le terminal comprend un échantillonneur, un convertisseur analogique-numérique, un modem d'un type capable d'assurer la transmission de données numériques sur une ligne téléphonique, une interface étant insérée entre le modem et l'échantillonneur. Pour sa part, le poste central de traitement comprend un modem de réception, des moyens pour recevoir les données numériques transmises par la ligne téléphonique, et des moyens aptes à déterminer l'identité et l'intégrité du sceau correspondant aux signaux reçus.

Une telle répartition des moyens électroniques confère au système une grande souplesse d'utilisation.

Mais, naturellement, on peut concevoir, dans le cadre de l'invention, un terminal qui serait totalement autonome et qui effectuerait lui-même les contrôles d'identité et d'intégrité.

Les caractéristiques de l'invention apparaîtront mieux après la description qui suit, d'exemples de réalisation donnés à titre explicatif et non limitatif. Cette description se réfère à des dessins annexés, sur lesquels :

- la figure 1 montre un schéma général du système de l'invention,
- la figure 2 illustre la structure d'un circuit d'échantillonnage et de conversion en numérique,
- la figure 3 représente un schéma d'un mode de réalisation d'une valise autonome reliée à un poste central de traitement.

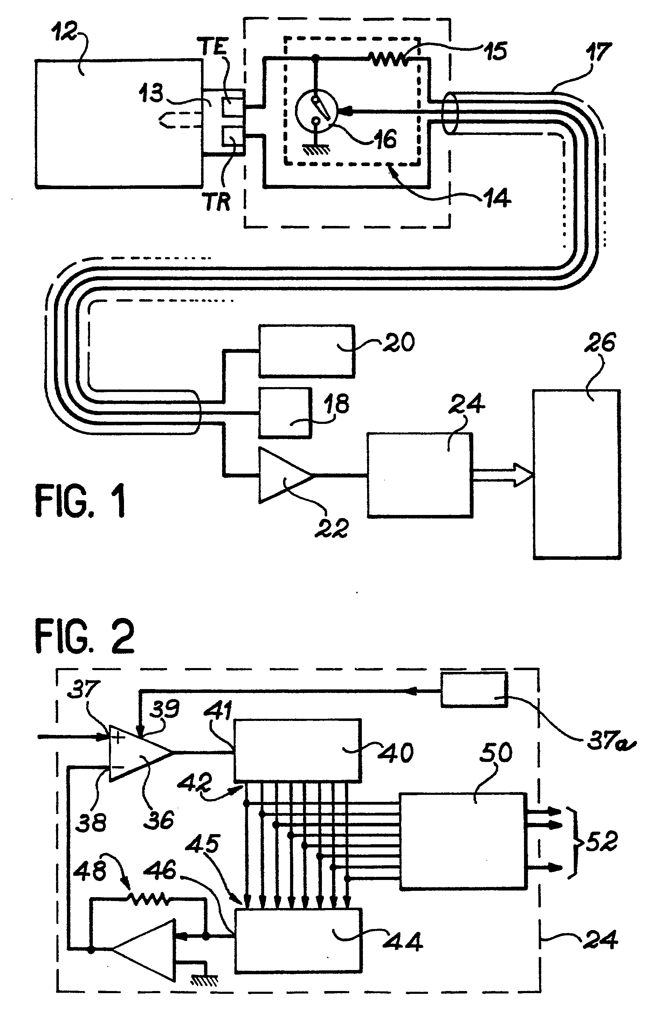

La figure 1 montre un système de surveillance conforme à l'invention. Un conteneur 12 est muni d'un sceau à ultrasons 13 d'un type double c'est-à-dire comprenant un transducteur émetteur TE et un transducteur récepteur TR. Ce sceau est relié à une sonde (en tirets) qui assure les connexions électriques avec les transducteurs et qui contient un circuit d'excitation 14. Comme expliqué plus haut, ce circuit est apte à appliquer sur le sceau TE un échelon de tension. A cette fin, il comprend une résistance 15 dont une borne est reliée directement au transducteurémetteur TE et une autre borne, par l'intermédiaire d'un câble 17, à une alimentation continue stabilisée 20 qui délivre une tension continue de 100 V environ. Un interrupteur 16 relie le transducteur émetteur à la masse. Il est relié, par le même câble 17, à un circuit d'impulsions basse tension 18 (quelques volts). Par ailleurs, le transducteur récepteur TR, est relié, à travers le câble 17, à un amplificateur 22 (facultatif), lequel est connecté à un circuit 24 échantillonneur-convertisseur. Ce dernier délivre des informations numériques qui sont traitées par un moyen 26.

Le fonctionnement de ce système est le suivant. Une tension de 100 V environ est appliquée au transducteur émetteur TE. Lorsqu'une impulsion est émise par le circuit 18, l'interrupteur 16 (qui, en pratique, peut être un thyristor) se ferme et la tension appliquée à TE est brusquement annulée. C'est cet échelon de tension (négatif dans le cas décrit) qui excite le transducteur. La réponse du sceau est reçue par le transducteur récepteur TR et transmise par le câble 17 à l'amplificateur 22 et aux circuits quisuivent. L'impulsion de basse tension (environ 5 V) fermant l'interrupteur 16 est appliquée suffisamment longtemps pour que le signal de lecture soit analysé. Puis cette impulsion est supprimée et le transducteur reprend sa tension de 100 V, avec une constante de temps qui dépend de la résistance 15.

La figure 2 illustre un mode de réalisation du circuit 24 d'échantillonnage et de conversion en numérique. Tel que représenté ce circuit comprend :

- un comparateur rapide 36, possédant une entrée positive 37 recevant le signal à échantillonner, une entrée négative 38 et une entrée de commande d'échantillonnage 39 ; ce comparateur peut être du type AM 686 ;
- une horloge 37 a délivrant les impulsions définissant les instants d'échantillonnage ;
- un compteur 40 possédant une entrée 41 reliée à la sortie du comparateur et une sortie numérique 42 ; ce compteur, qui est en fait un registre fonctionnant sur le principe de la dichotomie, peut être un MC 14559 ;
- un convertisseur numérique-analogique 44, possédant une entrée numérique 45 reliée à la sortie 42 du compteur et une sortie analogique 46 ; ce convertisseur peut être un AD 561 ;
- un convertisseur courant-tension 48 inséré entre la sortie du convertisseur et l'entrée négative 38 du comparateur ; ce convertisseur peut être un SN 72 740 ;
- une mémoire tampon 50, possédant une entrée reliée à la sortie du compteur et une sortie reliée à un bus de données 52.

Ce circuit fonctionne de la façon suivante. Le signal à échantillonner est appliqué sur l'entrée 37 du comparateur 36. Le signal commandant l'échantillonnage est appliqué sur l'entrée 39. Si le signal à échantillonner est supérieur à la tension appliquée sur l'entrée 38 au moment où est appliqué le signal d'échantillonnage, la sortie comparateur passe au niveau 1 et incrémente le compteur 40. La sortie numérique du compteur est transformée en valeur analogique, laquelle sert de tension de comparaison appliquée à l'entrée 38 du comparateur. Par approximations successives, et au bout de 8 impulsions d'horloge, le contenu du compteur est égal au signal d'entrée à l'instant d'échantillonnage. Le temps total par échantillon est en pratique de 10 fois 1,6 ms soit 16 ms. La sortie 42 du compteur est un bus à 8 fils ; elle est reliée au circuit tampon 50 qui est du type à collecteurs ouverts. Celui-ci délivre la valeur numérique de l'échantillon sur le bus de sortie 52 sous forme d'un octet. L'échantillonnage peut porter sur 1024 points espacés de 20 ns. Pour un signal à 5 MHz, soit 200 ns de période, on obtient ainsi 10 échantillons par alternance. Comme il faut pouvoir tenir compte du signe du signal échantillonné (puisque celui-ci est le signal haute fréquence et non le signal redressé) on codera les échantillons entre -128 et 127, soit 256 points, ce qui nécessite 8 bits par échantillon, soit un octet.

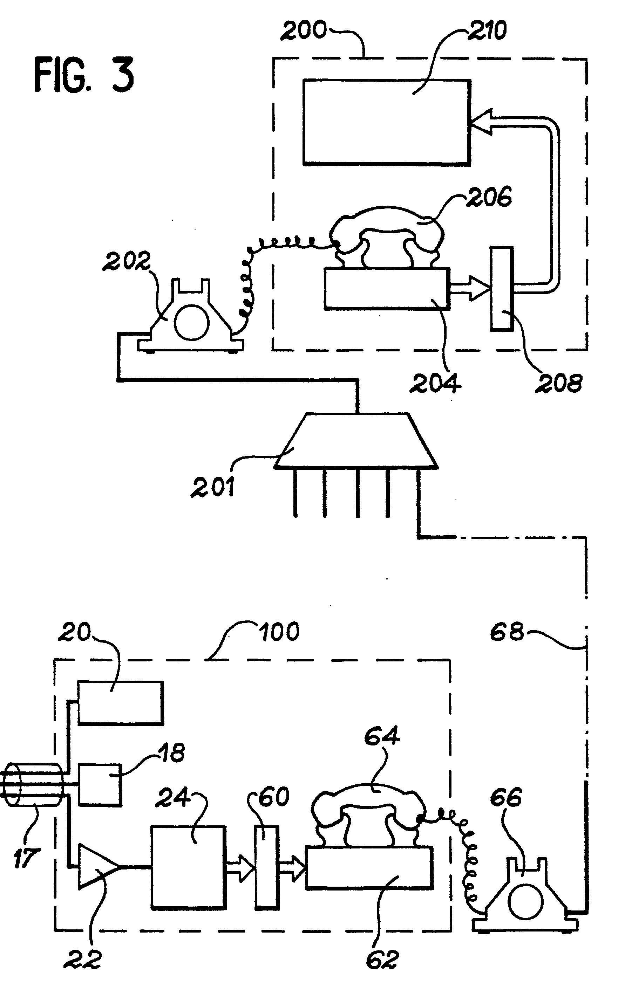

Comme souligné plus haut, les moyens de contrôle d'identité et d'intégrité sont avantageusement rassemblés dans un poste central de traitement accessible par ligne téléphonique. Dans cette variante, l'organisation du système est celle de la figure 3. L'ensemble des organes 18, 20, 22, 24 déjà mentionnés est rassemblé dans une valise 100 qui contient en ou tre une interface 60 et un modem 62 d'un type coopérant avec un combiné téléphonique 64. Ce dernier est relié au poste téléphonique 66 du lieu où s'effectue le contrôle.

Par liaison téléphonique ordinaire 68, il est possible de se connecter sur un poste central de traitement 200 à travers un autocommutateur 201 relié à un poste téléphonique 202. Ce poste central comprend un modem 204 coopérant avec le combiné téléphonique 206, une interface 208 et un circuit de traitement 210 Ce dernier comprend une mémoire constituant une bibliothèque de signatures et des moyens de comparaison entre la signature lue et les signatures mémorisées. Le circuit 210 résout donc un problème classique de "reconnaissance de forme". Tout moyen connu (travaillant par corrélation ou par d'autres méthodes) peut être utilisé. Le poste central peut renvoyer, par la ligne téléphonique 68 toute information utile à l'utilisateur de la valise 100, et par exemple le numéro d'identification du sceau examiné ou une information binaire du genre correct/incorrect.

Il va de soi qu'on peut adjoindre aux moyens décrits plus haut divers organes connus, comme des systèmes de verrouillage-déverrouillage de l'information, une imprimante, un clavier destiné à introduire diverses informations comme un code confidentiel, etc...

**Revendications**

1. Système de surveillance de conteneurs utilisant un sceau ultrasonore (13) fixé sur chaque conteneur (12) et comprenant un circuit apte à délivrer un signal d'excitation appliqué au sceau, un circuit de réception du signal réémis par le sceau, des moyens de traitement de signal aptes à comparer le signal reçu avec un ensemble de signaux de référence, caractérisé par le fait que le sceau (13) est double et comprend un transducteur émetteur (TE) et un transducteur récepteur (TR), que le signal d'excitation est un échelon de tension appliqué au transducteur émetteur, et que le circuit (14) apte à délivrer cet échelon est connecté directement au transducteur émetteur (TE), sans câble de liaison.

2. Système selon la revendication 1, caractérisé par le fait que le circuit d'excitation (14) comprend une résistance (15) dont une borne est connectée au transducteur émetteur (TE) et une autre borne est reliée, par un câble de liaison (17), à une alimentation continue stabilisée (20), et un interrupteur (16) inséré entre le transducteur émetteur (TE) et la masse, l'état de cet interrupteur étant commandé par une impulsion de basse tension délivrée par une source d'impulsion (18) à travers le câble de liaison (17).

3. Système selon la revendication 2, caractérisé par le fait que les moyens de traitement du signal sont répartis entre une valise autonome (100) et un poste central de traitement (200), la valise comprenant notamment l'alimentation stabilisée (20), la source (18), un circuit (24) d'échantillonnage et de conversion en numérique, et le poste central comprenant une mémoire dans laquelle sont stockés des signaux de référence et un organe de comparaison, chaque valise pouvant être reliée audit poste central au moyen de modems (62, 204) et d'une ligne téléphonique (68).

**Patentansprüche**

1. Überwachungssystem für Behälter mit ultraschallprüfbarem Verschluß (13), der auf jedem Behälter (12) befestigt ist, und enthaltend eine Schaltung, die dazu eingerichtet ist, ein dem Verschluß zugeführtes Erregungsignal abzugeben, eine Empfangsschaltung für das von dem Verschluß zurückgeworfene Signal, Einrichtungen zur Verarbeitung des Signals, die dazu eingerichtet sind, das empfangene Signal mit einer Gruppe von Bezugssignalen zu vergleichen, dadurch gekennzeichnet, daß der Verschluß (13) doppelt ist und einen Wandlersender (TE) und einen Wandlerempfänger (TR) enthält, daß das Erregungsignal ein Spannungsstufensignal ist, das an den Senderwandler angelegt wird, und daß die Schaltung (14), die dazu eingerichtet ist, dieses Stufensignal abzugeben, direkt mit dem Senderwandler (TE) ohne Verbindungskabel verbunden ist.

2. System nach Anspruch 1, dadurch gekennzeichnet, daß die Erregerschaltung (14) einen Widerstand (15) enthält, von dem ein Anschluß mit dem Senderwandler (TE) und ein anderer Anschluß über ein Verbindungskabel (17) mit einer stabilisierten Gleichspannungsquelle (20) und einem Schalter (16) verbunden ist, der zwischen den Senderwandler (TE) und Masse eingefügt ist, wobei der Zustand dieses Schalters durch einen Impuls niedriger Spannung gesteuert wird, der von einer Impulsquelle (18) über das Verbindungskabel (17) zugeführt wird.

3. System nach Anspruch 2, dadurch gekennzeichnet, daß die Verarbeitungseinrichtungen für das Signal zwischen einem autonomen Koffer (100) und einer zentralen Verarbeitungsstelle (200) aufgeteilt sind, wobei der Koffer insbesondere die stabilisierte Stromzuführungseinrichtung (20), die Quelle (18), eine Tast- und A/D-Wandlerschaltung (24) enthält und die Zentralstelle einen Speicher enthält, in welchem Bezugssignale gespeichert sind, und ein Vergleichsorgan, wobei jeder Koffer mit der Zentralstelle über Modems (62, 204) und eine Telefonleitung (68) verbunden werden kann.

**Claims**

1. System for monitoring containers using an ultrasonic seal (13) fixed to each container (12) and comprising a circuit able to supply an excitation signal applied to the seal, a reception circuit for the signal retransmitted by the seal, a signal processing means able to compare the signal received with a group of reference signals, characterized in that the seal (13) is duplicated and comprises a transmitting transducer (TE) and a receiving transducer (TR), in that the excitation signal is a voltage step applied to the transmitting transducer and in that the circuit (14) able to supply said step is connected directly to the transmitting transducer (TE) without a connecting cable.

2. System according to claim 1, characterized in that the excitation circuit (14) comprises a resistor (15), whereof one terminal is connected to the transmitting transducer (TE) and another terminal is connected by a connecting cable (17) to a stabilized d.c. supply (20), and a switch (16) inserted between the transmitting transducer (TE) and earth, the state of said switch being controlled by a low voltage pulse supplied by a pulse source (18) through the connecting cable (17).

3. System according to claim 2, characterized in that the signal processing means are distributed between an autonomous suitcase (100) and a central processing station (200), the suitcase particularly incorporating the stabilized power supply (20), the source (18), the sampling and digital conversion circuit (24) and the central station comprising a memory in which are stored the reference signals and a comparison member, each suitcase being connectable to the central station by modems (62, 204) and a telephone line (68).

FIG. 1

FIG. 2

# FIG. 3